# EUROPEAN PATENT SPECIFICATION

(11) **EP 2 292 687 B1**
(45) Date of publication and mention of the grant of the patent: **25.07.2012**
(21) Application number: 09169333.3
(22) Date of filing: 03.09.2009
(51) Int. Cl.: C08K 5/29, C08K 5/3462, C08L 15/00, C08L 33/00

(54) **Improved vulcanisable guanidine-free mixtures containing ethylene acrylate (AEM), polyacrylate (ACM) and/or hydrogenated acrylnitrile (HNBR)-based rubbers compounds, vulcanisates, prepared by cross-linking this vulcanisable mixtures and their use**
Verbesserte vulkanisierbare guanidinfreie Mischungen mit ethylenacrylat- (AEM), polyacrylat- (ACM) und/oder hydriertem acrylnitrilbasierten (HNBAR) Gummiverbindungen, Vulkanisaten, hergestellt durch Vernetzung dieser vulkanisierbaren Mischungen und ihrer Verwendung
Mélanges vulcanisables améliorés exempts de guanidine contenant des caoutchoucs à base d'éthylène acrylate (AEM), polyacrylate (ACM), et/ou acrylnitrile hydrogéné (HNBR), vulcanisats préparés par réticulation de ces mélanges vulcanisables et leur utilisation

(43) Date of publication of application: 09.03.2011
(73) Proprietor: Rhein Chemie Rheinau GmbH, 68219 Mannheim (DE); LANXESS Deutschland GmbH, 51369 Leverkusen (DE)
(72) Inventor: Soddemann, Matthias, 51503, Rösrath (DE); Bergmann, Christina, 22523, Hamburg (DE); Säwe, Martin, 69488, Birkenau (DE)
(74) Representative: Siegers, Britta

(56) References cited:
- WO-A1-2006/066394
- US-A- 5 403 884

## Description

The present invention relates to vulcanisable guanidine-free mixtures containing ethylene acrylate (AEM), polyacrylate (ACM) and/or hydrogenated acrylonitrile (HNBR)-based rubber compounds having an improved scorch resistance, to vulcanisates, prepared by cross-linking this vulcanisable mixtures and their use in automotive, oil-field and/or off-shore applications.

The demand for high performance elastomers in automotive and industrial applications has considerably increased due to special requirements as well as the complex design of the automotive components. Novel materials are strongly requested, which fulfill these requirements as well as an improved scorch resistance.

Ethylene acrylate (AEM) elastomers and polyacrylate (ACM) elastomers comprising small amounts of a butene dioic acid monoalkyl ester cure-site monomer are widely used in the automotive industry due to their excellent resistance to lubricating oils and greases, heat and compression set resistance, mechanical toughness and their low brittle point. As such, they are well suited for gaskets and seals, various types of automotive hoses, spark plug boots and similar engine compartment rubber components.

Typically those products are produced by cross-linking a blend of the uncrosslinked (i.e. unvulcanized gum rubber) copolymer and a diamine curing agent along with various fillers and other additives in a press-curing step at sufficient time, temperature and pressure to achieve covalent chemical bonding.

A curative system consisting of an AEM-terpolymer, hexamethylene diamine carbamate (HMDC) as a curing agent in combination with a guanidine as an accelerator is well established. Different guanidine derivatives are in use depending on the intended application. This means that i.e. diphenyl guanidine (DPG) is preferred, if good flex resistance and elongation are required or di-o-tolylguanidine (DOTG), if the best compression set is requested.

HNBR-polymers can be vulcanized i.e. according to JP 2008-056793A. AEM- or ACM-based polymers can be vulcanized by using hexamethylene diamine carbamate (HMDC) as a curing agent in combination with guanidine as an accelerator.

Systems containing guanidine as an accelerator are well known, but these guanidines have been the subject to public debates for their hazardous potential. Guanidine raised questions concerning the medical and toxicological aspects in the workplace area. Several studies conducted with regard to the vulcanisation mechanisms with guanidine accelerators have shown that at elevated temperatures during vulcanisation, reaction products such as aromatic amines (e.g. aniline or o-toluidine) have to be considered.

JP A-50-45031 proposes an elastomer composition obtained by mixing hexamethylene diamine or hexamethylene diamine carbamate as a vulcaniser and 4,4'-methylenedianiline as an accelerator with an acrylate butenedioic acid monoester bipolymer or an ethylene-acrylate-butanedioic acid monoester terpolymer to achieve good compression set characteristics. The aromatic amine accelerator 4,4'-methylenedianiline in itself, like aniline or o-toluidine, is problematic due to its carcinogenic and toxicological potential. Some of these aromatic amines have been classified as unequivocally carcinogenic and are therefore included in the first category of the hazardous materials list for this reason. O-toluidine for example was classified as a category 1 carcinogen in the 2006 MAK and BAT Value List of the Deutsche Forschungsgemeinschaft (German Research Foundation). This listing is the basis for the legislative process of classifying substances according to their risk potential. Substances which are listed as carcinogen class 1 or which are known for releasing such a substance as a by-product during use should be avoided, as they might have a negative impact on human health and there is a high likelihood that they will be included in the list of substances that need special authorization under REACH. Extended studies focused on the noxious effects of o-toluidine on the human health have underlined the necessity of the development of less hazardous alternatives for this accelerator. O-toluidine is also released from rubbers that contain di-o-tolylguanidine (DOTG) as an accelerator only in small amounts.

Because of the aforementioned risks for human health with the guanidine based accelerator systems, alternative systems for accelerating the diamine cure have been introduced. One alternative system of vulcanisation accelerators is described in EP-A 2033989. This relates to a composition of vulcanisation accelerators, comprising
(1) a first vulcanisation accelerator selected from the group consisting of an amine, a salt thereof, an amidine, a salt thereof and a mixture thereof,
(2) a second vulcanisation accelerator selected from the group consisting of a benzothiazole derivative or a zinc salt thereof, a mercapto-benzimidazole derivative or a zinc salt thereof, a dithiophosphate (C₃-C₃₂) derivative or a zinc-dithiophosphate (C₃-C₃₂) derivative, a thiuram derivative, a zinc-dithiocarbamate derivative, and a mixture thereof.

In US-A 5 403 884 carbodiimides are used as crosslinking agents in combination with 1,4-diazabicyclo[2.2.2]octane (DABCO) as catalyst for flocking cured or uncured elastomeric substrates in a aqueous-solution.

However, all guanidine replacements including the above-mentioned composition of vulcanisation accelerators show significantly less scorch safety. This on the other hand has unwanted implications on the processing of the compounds in the production plant.

An object of the present invention therefore was to provide an alternative accelerator system for the diamine crosslinking system, which does not contain guanidines and - at the same time - lead to a high scorch safety and thus lead to a manageable vulcanisation process.

Surprisingly, it has now been found that guanidin-free vulcanisable mixtures containing ethylene acrylate (AEM), polyacrylate (ACM) and/or hydrogenated acrylonitrile (HNBR)-based rubbers and a mixture of certain accelerators and retarders achieve this objective.

The present invention therefore provides guanidine-free vulcanisable mixtures containing ethylene acrylate (AEM), polyacrylate (ACM) and/or hydrogenated acrylnitrile (HNBR)-based rubbers and at least one vulcanisation accelerator selected from a C₁-C₁₂ non aromatic amine, selected from the group of diethylamine, butylamine and/or cyclohexylamine, or an amidine as well as salts and any mixtures thereof, and at least one retarder system comprising benzoic acid, salicylic acid, phthalic acid, phthalic acid anhydride and/or C₆-C₂₄-dicarboxylic acid (a), and/or carbodiimide (b) and/or a polycarbodiimide (c) and any mixtures of the above-mentioned retarders.

The polymers AEM, ACM and/or HNBR are well known in the art, either commercially available or may be produced by a person skilled in the art according to processes well described in the literature.

These known AEM-systems and/or ACM-systems, are for example disclosed in EP 1 378 539 A (ACM rubber systems), US 2,599,123 (AEM rubber systems) and EP 1 499 670 A (AEM rubber systems).

Furthermore, respective ACM rubbers are commercially available from Unimatec® under the trademark Noxtite® or from Zeon® under the trademark HY Temp® AR Polymer and respective AEM-rubbers are commercially available from DuPont under the trademark Vamac® Polymer.

Hydrogenated acrylonitrile (HNBR)-based rubbers according to the invention are described in EP 08022135.1 and EP 09164539.0.

In one preferred embodiment of the present invention the hydrogenated acrylonitrile (HNBR)-based polymer system is a vulcanisable polymer composition comprising
a polymer having a main polymer chain derived from
(ia) at least 25 % to 95% by weight, preferably 25 to 85% by weight, more preferably 30 to 80% by weight, and particularly preferably 45 to 75% by weight, of at least one diene monomer, like i.e. 1,3-butadiene, isoprene, 2,3-dimethyl-1,3-butadiene, and 1,3-pentadiene based on the polymer, and
(ib) in the range of from 0,1 to 74,9 % by weight, preferably 10 to 60% by weight, more preferably 15 to 55% by weight, particularly preferably 20 to 50% by weight, of an α,β-ethylenically unsaturated nitrile monomer, like i.e. acrylonitrile, α-alkylacrylonitril, with alkyl = C₁-C₁₂-alkyl, and/or α-haloacrylonitriles, with halo = F, Cl, Br and I, based on the polymer, and
(ic) in the range of from 0,1 to 20% by weight, preferably 0.5 to 20% by weight, more preferably 1 to 15% by weight, particularly preferably 1.5 to 10% by weight of at least one α,β-ethylenically unsaturated dicarboxylic acid monoester monomer, α,β-ethylenically unsaturated dicarboxylic acid monomer, α,β-ethylenically unsaturated dicarboxylic acid anhydride monomer or α,β-ethylenically unsaturated dicarboxylic acid diester as a third monomer,
wherein the sum of all monomer units mentioned under (ia), (ib) and (ic) is 100% by weight, as disclosed in EP 08022135.1 and EP 09164539.0.

A particularly preferred polymer composition according to the present invention comprises:
(i) an optionally hydrogenated nitrile polymer derived from
   (ia) at least one conjugated diene,
   (ib) at least one α,β-unsaturated nitrile, and
   (ic) at least one α,β-ethylenically unsaturated dicarboxylic acid monoester monomer, α,β-ethylenically unsaturated dicarboxylic acid monomer, α,β-ethylenically unsaturated dicarboxylic acid anhydride monomer or α,β-ethylenically unsaturated dicarboxylic acid diester.

The hydrogenated nitrile rubber may contain repeating units of other monomer units than those (ia), (ib) and (ic) which can be copolymerised with the various aforesaid monomer units, namely and in particular with the diene monomer, the αβ-ethylenically unsaturated nitrile monomer, the αβ-ethylenically unsaturated dicarboxylic acid monoester monomer. As such other monomers, αβ-ethylenically unsaturated carboxylate esters (other than αβ-ethylenically unsaturated dicarboxylic acid monoester), aromatic vinyl, fluorine-containing vinyl, αβ-ethylenically unsaturated monocarboxylic acid, and copolymerisable antiaging agent may be used.

As additional αβ-ethylenically unsaturated carboxylate ester monomers (other than αβ-ethylenically unsaturated dicarboxylic acid monoester), for example, alkyl acrylate ester and alkyl methacrylate ester in which the carbon number of the alkyl group is 1-18 such as methyl acrylate, ethyl acrylate, propyl acrylate, butyl acrylate, n-dodecyl acrylate, methyl methacrylate, ethyl methacrylate; alkoxyalkyl acrylate and alkoxyalkyl methacrylate in which the carbon number of the alkoxyalkyl is 2-12 such as methoxymethyl acrylate, methoxyethyl methacrylate; cyanoalkyl acrylate and cyanoalkyl methacrylate in which the carbon number of the cyanoalkyl group is 2-12 such as α-αcyanoethyl acrylate, β-cyanoethyl acrylate, cyanobutyl methacrylate; hydroxyalkyl acrylate and hydroxyalkyl methacrylate in which the carbon number of the hydroxyalkyl group is 1-12 such as 2-hydroxyethyl acrylate, 2-hydroxyethyl methacrylate, 3-hydroxypropyl acrylate; fluorine-substituted benzyl group-containing acrylate and fluorine-substituted benzyl group-containing methacrylate such as fluorobenzyl acrylate, fluorobenzyl methacrylate; fluoroalkyl group-containing acrylate and fluoroalkyl group-containing methacrylate such as trifluoroethyl acrylate, tetrafluoropropyl methacrylate; unsaturated polycarboxylic acid polyalkyl ester such as dimethyl maleate, dimethyl fumarate, dimethyl itaconate, diethyl itaconate and the like; amino group-containing αβ-ethylenically unsaturated carboxylic acid ester such as dimethylaminomethyl acrylate, diethylaminoethyl acrylate; may be proposed.

The hydrogenation of the copolymer can take place in a manner known to a person skilled in the art. Suitable processes for the hydrogenation of nitrile rubbers are for example described in US 3,700,637, DE-PS 2 539 132, EP-A 134023, DE-A 35 40 918, EP-A 298386, DE-A 35 29 252, DE-A 34 33 392, US 4,464,515 and US 4,503,196.

The process for the production of the aforesaid nitrile rubber is not restricted in particular. In general, a process in which the αβ-ethylenically unsaturated nitrile monomer, αβ-ethylenically unsaturated dicarboxylic acid monoester monomer, diene monomer or α-olefin monomer, and other monomers that can be copolymerized with these which are added in accordance with requirements, are copolymerised is convenient and preferred. As the polymerisation method, any of the well known emulsion polymerisation methods, suspension polymerisation methods, bulk polymerisation methods and solution polymerisation methods can be used, but the emulsion polymerisation method is well known methods may be adopted.

All the AEM, ACM and HNBR polymers contain optionally at least one antioxidant, filler and/or cross-linking agent as a further component.

Accelerators according to the invention are chemical agents that accelerate the vulcanisation reaction like C₁-C₁₂-non-aromatic amines, amidine as well as salts and any mixtures thereof.

As a preferred embodiment of the present invention, the accelerator mixture comprises 1,8-diazabicyclo[5.4.0]undecene-7 (DBU) or 1,5-diazabicyclo[4.3.0]nonene-5 (DBN), 1,5,7-triazabicyclo[4.4.0]dec-5-ene (TBD) and/or 7-methyl-1,5,7-triazabicyclo[4.4.0]dec-5-ene (MTBD) and its derivatives as an amidine. From these, 1,8-diazabicyclo[5.4.0]undecene-7 is mostly preferred. All these amidines are commercially available products.

The compounds are well know and commercially available, i.e. 1,8-diazabicyclo[5.4.0]undecene-7 (DBU) is commercially available from BASF under the trade mark Lupragen® N700.

C₁-C₁₂-non aromatic amines, which can be used according to the invention are all primary, secondary or tertiary alkylamines, like i.e. diethylamine and dicyclohexylamine; butylamine and cyclohexylamine and/or dicyclohexylamine. In terms of safe production processes, amines having a higher flashing point than 100 °C are mostly preferred, like dicyclohexylamine. All the amines are commercially available products.

The vulcanisation accelerator may be contained in the composition according to the present invention in an amount of preferably 0.1 to 10 wt.%, more preferably 0.5 to 8 wt.% most preferably 1.0 to 5.0 wt.%, in each case with respect to the total amount of the polymer in compositions according to the present invention.

A retarder is a chemical agent that slows down a rate determining step in a cascade of chemical reactions. For example, retarders are used to delay the onset of sulfur crosslinking (also known as curing or vulcanisation). A retarder can be useful during compound development as well as an additive to existing formulations to add a few minutes of processing safety (increase Mooney scorch time) to any kind of cure system. additive to existing formulations to add a few minutes of processing safety (increase Mooney scorch time) to any kind of cure system.

In a preferred embodiment of the present invention, the retarder is used in an amount of from 0.1 to 7 wt.-%, preferably from 0.3 to 5 wt.-%, more preferably from 0.5 to 3 wt.-% based on the total amount of the polymer in compositions according to the present invention.

In one peferred embodiment of the present invention acids are used as retarders according to the invention. Acids (a) according to the invention are benzoic acid, salicylic acid, phthalic acid, phthalic acid anhydride and/or C₆-C₂₄-dicarboxylic acid. These acids are commercially available products.

In a further preferred embodiment of the present invention, the retarder is a carbodiimide (b).

If carbodiimides are used in combination with the aforementioned accelerators for example in acrylic polymers, the vulcanisation is delayed and the compound shows an improved scorch resistance.

The carbodiimide compounds used in the present invention, can be synthesized by commonly well known methods or are commercially available. The compound can be obtained, for example, by conducting a decarboxylation condensation reaction of various polyisocyanates using an organophosphorus compound or an organometallic compound as a catalyst at a temperature not lower than 70 °C, without using any solvent or using an inert solvent.

Examples of a monocarbodiimide compound included in the above-described carbodiimide compounds are dicyclohexylcarbodiimide, diisopropylcarbodiimide, dimethylcarbodiimide, diisobutylcarbodiimide, dioctylcarbodiimide, tert.-butylisopropylcarbodiimide, 2,6-diisopropylphenylencarbodiimide, diphenylcarbodiimide, di-tert.-butylcarbodiimide and di-β-naphthylcarbodiimide, and among them, dicyclohexylcarbodiimide or diisopropylcarbodiimide are particularly preferable in view of availability on an industrial scale.

In another embodiment of the present invention polycarbodiimides (c) are used. These polycarbodiimides are commercially available or can be produced by conventional production methods for polycarbodiimides [for example, the methods disclosed in US 2,941,956; JP-B-47-33279, J. Org. Chem. 28,2069-2075 (1963) and Chemical Review, 1981, Vol. 81, No.4, pages 619 to 621].

The carbodiimide compound includes in particular 4,4'-dicyclohexylmethanecarbodiimide (degree of polymerization = 2 to 20), tetramethylxylylenecarbodiimide (degree of polymerization = 2 to 20), N,N-dimethylphenylcarbodiimide (degree of polymerization = 2 to 20) and N,N'-di-2,6-diisopropylphenylencarbodiimide (degree of polymerization = 2 to 20), and is not specifically limited as long as the compound has at least one carbodiimide group in a molecule.

Within the meaning of the present invention, suitable carbodiimides are in particular monomeric, dimeric or polymeric carbodiimides.

In the following, some aspects of the preferred carbodiimide compounds are described in detail.

In an preferred embodiment of the invention at least one sterically hindered carbodiimide is used as a retarder.

In another embodiment of the present invention the retarder is at least one monomeric or dimeric carbodiimide.

Preferably at least one dimeric carbodiimid or a polycarbodiimide of the formula (II)

- R'-(N=C=N-R)ₙ-R" (I)

in which
- R represents an aromatic, aliphatic, cycloaliphatic or aralkylene radical which, in the case of an aromatic or an aralkylene residue, in at least one ortho-position, preferably in both ortho-positions to the aromatic carbon atom which carries the carbodimide group, may carry aliphatic and/or cycloaliphatic substituents with at least 2 C-atoms, preferably branched or cyclic aliphatic radicals with at least 3 C-atoms,
- R' represents aryl, aralkyl or R-NCO, R-NHCONHR¹, R-NHCONR¹R² and R-NHCOOR³,
- R" represents -N=C=N-aryl, -N=C=N-alkyl, -N=C=N-cycloalkyl, -N=C=N-aralkyl, -NCO, -NHCONHR¹, -NHCONR¹R² or -NHCOOR³, wherein, in R' and in R", independently of one another, R¹ and R² are the same or different and represent an alkyl, cycloalkyl or aralkyl radical, and R³ has one of the meanings of R1 or represents a polyester or a polyamide radical, and
- n represents an integer from 2 to 5,000, preferably from 2 to 500
are used.

In a first preferred embodiment of this mode, R represents an aromatic or an aralkylene radical, which, in the case of an aromatic or an aralkylene residue, in at least one ortho-position, preferably in both ortho-positions to the aromatic carbon atom which carries the carbodiimide group, carries aliphatic and/ or cycloaliphatic substituents with at least 2 C-atoms, preferably branched or cyclic aliphatic radicals with at least 3 C-atoms, more preferably isopropyl residues.

In particular those carbodiimides of the general formula (I) or (II) are preferred in which the ortho-positions to the aromatic carbon atom which carries the carbodiimide group are substituted by isopropyl and in which the para-positions to the aromatic carbon atom which carries the carbodiimide group are also substituted by isopropyl.

In a further preferred embodiment of the polymeric carbodiimides, R represents an aromatic residue, which is bonded by a C₁- to C₈-alkyl moiety, preferably a C₁ to C₄-moiety, with the carbodiimide group.

Furthermore, polymeric aliphatic carbodiimides can be used, for example on the basis of isophorone diamine which is for example commercially available by Nisshinbo.

In this mode of the present invention the carbodiimide is preferably represented by the general formula (II) 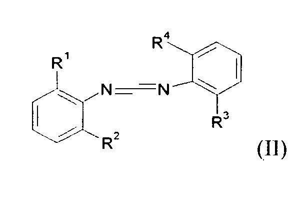 in which R¹
in which the residues R¹ and R⁴ represent independently from each other a linear branched C₂- to C₂₀-cycloalkyl residue, a C₆- to C₁₅-aryl residue or a C₆ to C₁₅-aralkyl residue.

It is preferred that the residues R¹ to R⁴ are C₂- to C₂₀-alkyl or C₂- to C₂₀-cycloalkyl residues.

It is further preferred that the residues R¹ to R⁴ are C₂ to C₂₀-alkyl residues.

In the present invention, C₂- to C₂₀-alkyl and C₂- to C₂₀-cycloalkyl stands preferably for ethyl, propyl, isopropyl, sec.-butyl, tert.-butyl, cyclohexyl and/or dodecyl, whereby the residue isopropyl is in particular preferred.

In the present invention, C₆- to C₁₅-aryl and C₆- to C₁₅-aralkyl stand preferably for phenyl, tolyl, benzyl or naphthyl.

Especially preferred is the use of one monomeric carbodiimide according to formula (III)

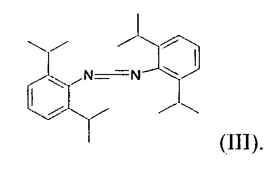

The polycarbodiimides (c) used as retarders are commercially available products, for example from Rhein Chemie Rheinau GmbH under the tradenames Stabaxol® P, Stabaxol® P100, Stabaxol® P200 and Stabaxol® P400. Furthermore, respective carbodiimides are commercially available from Raschig under the tradenames Stabilisator 2000, 9000 and 11000.

Alternatively they can be prepared according to methods well known by persons skilled in the art. To prepare the carbodiimides and/or polycarbodiimides of the general formulas (I) - (III), its mono- or diisocyanates can be condensed as starting compounds at elevated temperatures, for example at 40 to 200 °C, in the presence of catalysts with the release of carbon dioxide. Suitable methods are described in DE-A-11 30 594 and in FR 1 180 370.

The polymeric carbodiimides of the general formula (II) may be terminal reacted with isocyanate compounds.

The carbodiimides may also be used as a mixture of different carbodiimides.

In a further embodiment of the present invention, it is also possible that a mixture of different carbodiimides is used. In case a mixture of different carbodiimides is used, the used carbodiimides may be selected from the group consisting of monomeric, dimeric and polymeric carbodiimides. In respect of the monomeric, dimeric and polymeric carbodiimides, it is referred to the explanations above.

Furthermore, it is preferred that the used carbodiimides have a reduced content of free isocyanates. Preferred carbodiimides have a reduced content of free isocyanates lower than 1 wt.-%.

The system according to the present invention is not only understood as a composition in the classical way of understanding, as the definition of a system according to the present invention also comprises the combined or separate use of the system of accelerators and of the retarders in the preparation of polymers at any time during the vulcanisation process of the rubbers.

In one preferred embodiment of the present invention the carbodiimides are used as a mixture of at least two different carbodiimides as a retarder.

The vulcanisation accelerators according to the above-mentioned invention may be deposited on at least one particulate filler such as precipitated and fumed silica, carbon black or other inorganic mineral, or may be used as a polymer bound material.

In another preferred embodiment of the present invention the vulcanisable mixtures further comprise a filler selected from the group consisting of silica, carbon black, clay, talc, aluminum hydroxide, calcium carbonate, and magnesium carbonate.

In another preferred embodiment of the present invention the vulcanisable mixtures further comprise additives selected from the group consisting of dispersants and plasticizers.

Optionally the vulcanisable polymer composition according to the present invention may further comprise one or more additional vulcanizing agents besides the diamine crosslinking agent. Such additional vulcanisation systems are well known in the art and the choice thereof is within the purview of a person skilled in the art.

In one embodiment, an organic peroxide (e.g., dicumyl peroxide or 2,2'-bis(tert-butylperoxy diisopropyl-benzene) may be used as additional vulcanizing agent in the polymer composition according to the present invention.

In another embodiment, sulfur or another conventional sulfur-containing vulcanizing agent or even mixtures thereof may be used as additional vulcanizing agent(s) in the polymer composition according to the present invention. Suitable additional sulfur-containing vulcanizing agents are commercially available, e.g. Vulkacit^{®} DM/C (benzothiazyl disulfide), Vulkacit^{®} Thiuram MS/C (tetramethyl thiuram monosulfide), and Vulkacit^{®} Thiuram/C (tetramethyl thiuram disulfide). It may be suitable to even add a further peroxide to such sulfur-based vulcanizing agents like e.g. zinc peroxide.

In another preferred embodiment of the present invention the vulcanisable mixtures further comprise at least one additional polymer as a binding material, selected from the group consisting of acrylate rubber (ACM), ethylene acrylate rubber (AEM), ethylene propylene diene terpolymer (EPDM), ethylene propylene copolymer (EPM), ethylene vinyl acetate (EVM), ethylene methyl acrylate (EMA), acrylnitrile-diene copolymer (NBR), hydrogenated acrylnitril-diene copolymer (HNBR) and a mixture thereof.

The present invention further provides a process for preparing vulcanisates according to the invention characterized in that, ethylene acrylate (AEM), polyacrylate (ACM) and/or hydrogenated acrylonitrile (HNBR)-based rubbers and at least one vulcanisation accelerator selected from an amine, an amidine as well as salts and any mixtures of the above-mentioned accelerators and at least one retarder system comprising (a) an acid, preferably benzoic acid, salicylic acid, phthalic acid, phthalic acid anhydride and/or C₆-C₂₄-dicarboxylic acid, and/or (b) a carbodiimide, and/or (c) a polycarbodiimide and any mixtures of the above-mentioned retarders are cross-linked by using a curative system based on an polyamine, preferably a diamine or a diamine carbamate, such as i.e.
- hexamethylene diamine, hexamethylene diamine carbamate, tetramethylene pentamine, hexamethylene diamine-cinnamaldehyde adduct, or hexamethylene diamine-dibenzoate salt and/or
- an aromatic polyamine, preferably 2,2-bis (4-(4-aminophenoxy) phenyl) propane.

Among these, an aliphatic polyamine is preferred, and hexamethylene diamine carbamate is particularly preferred.

The content of the polyamine crosslinking agent in the vulcanisable polymer composition is in the range of from 0.2 to 20 parts by weight, preferably in the range of from 0.5 to 10 party by weight, more preferably of from 1.0 to 5 parts by weight based on 100 parts by weight of the polymer.

In such process for preparing the polymer vulcanisates the mixing of the ethylene acrylate (AEM), polyacrylate (ACM) and/or hydrogenated acrylonitrile (HNBR)-based rubbers, the polyamine crosslinking agent, and at least one vulcanisation accelerator selected from an non aromatic amine, an amidine, as well as salts and any mixtures thereof and at least one retarder system comprising (a) an benzoic acid, salicylic acid, phthalic acid, phthalic acid anhydride and/or C₆-C₂₄-dicarboxylic acid, and/or (b) a carbodiimide and/or (c) a polycarbodiimide and optionally the antioxidant, the filler and other conventional additives may be performed in any conventional manner known in the art. For example, all components may be admixed on a two-roll rubber mill or in an internal mixer.

Thus, the polymer composition is mixed and prepared in a conventional manner and the temperature during mixing is maintained as is known in the art. Temperatures in the range of from 80 to 130°C have proven to be typically applicable, always depending on the specific type of rubber used and other components as chosen.

In a typical embodiment of the present process it is then preferred to heat the polymer composition to form the rubber vulcanisates using conventional procedures also well known in the art. Preferably, the vulcanisable rubber composition is heated to a temperature in the range of from 130° to 200°C, preferably from 140° to 190°C, more preferably from 150° to 180°C. Preferably, the heating is conducted for a period of from 1 minute to 15 hours, more preferably from 5 minutes to 30 minutes.

In a further embodiment the present invention relates to a polymer vulcanisate obtainable by the process mentioned before.

In another preferred embodiment of the present invention diamine or a diamine carbamate are used as a curative system.

The present invention further provides for use of the inventive vulcanisate for automotive, oil-field and/or off-shore applications.

The present invention is described in more detail by reference to the following examples, without being limited to them.

### Examples:

### Example 1:

The vulcanisable mixtures presented in Table 1 show a comparative evaluation of a series of three compounds, prepared with a vulcanisation system comprising a vulcanisation agent, hexamethylene diamine carbamate and **Rhenogran**® DOTG (di-orto-tolyl-guanidine) or **Rhenogran**® XLA (according to EP-A 2033989) as different accelerators selected from the group in combination with or without Stabaxol® I as a retarder.

The ingredients for the compounds A, B, C and D in phr are summarized in Table 1

**Table 1:**

| Ingredient | A Comparative | B Comparative | C (according to the invention) | D (according to the invention) |
|---|---|---|---|---|
| Hy Temp® ACM - AR 12 | 100.00 | 100.00 | 100.00 | 100.00 |
| Corax®N-550 | 47.50 | 47.50 | 47.50 | 47.50 |
| Vanfre® VAM | 0.50 | 0.50 | 0.50 | 0.50 |
| Stearic acid | 0.50 | 0.50 | 0.50 | 0.50 |
| Aflux® 18 | 1.00 | 1.00 | 1.00 | 1.00 |
| Naugard® 445 | 2.00 | 2.00 | 2.00 | 2.00 |
| Rhenogran® HMDC-70/AEM | 0.85 | 0.85 | 0.85 | 0.85 |
| Rhenogran® DOTG-70 | 2.85 | - | - | - |
| Rhenogran® XLA-60 | - | 2.00 | 2.00 | 2.00 |
| Stabaxol® I | - | - | 1.12 | - |
| Benzoic acid | - | - | - | 0.70 |
| Total phr | 155.20 | 154.35 | 155.47 | 155.05 |

| | | | | |
|---|---|---|---|---|
| **Hy Temp**® **ACM-AR 12:** an acrylic polymer (ACM) commercially available from Zeon Chemicals L.P. **Corax**® **N-550:** Carbon Black commercially available from Evonik Degussa **Vanfre**® **VAM:** phosphate ester commercially available from C. H. Erbslöh as a surfactant / processing agent **Stearic acid:** octadecanoic acid is a saturated fatty acid commercially available from Faci, Italy as a surfactant / processing agent. **Aflux**® **18:** Primary fatty, C₁₈-amine commercially available from Rhein Chemie Rheinau GmbH, as a surfactant. **Naugard**® **445:** p-cumylated diphenylamine as an **antioxidant** commercially available from Chemtura **Rhenogran**® **HMDC-70/AEMD:** hexamethylene diaminecarbamate cross-linking agent masterbatch for acrylic- and ethylene-acrylic rubber commercially available from Rhein Chemie Rheinau GmbH **Rhenogran**® **DOTG-70:** di-orthotolylguanidine masterbatch for the vulcanisation of natural and synthetic rubbers commercially available from Rhein Chemie Rheinau GmbH **Rhenogran**® **XLA-60:** 1,8-diazabicyclo[5.4.0]undecene-7 containing accelerator masterbatch, commercially available from Rhein Chemie Rheinau GmbH **Stabaxol**® **I:** 2,6-diisopropylphenylcarbodiimide as a retarder, available from Rhein Chemie Rheinau GmbH **Benzoic acid:** Commercially available from IMCD Deutschland GmbH | | | | |

### Compound Tests

The respective polymer compositions were blended in a laboratory internal mixer GUMIX 2 IM, type Banburry, with 40 RPM and a 70 % filling factor, using an upside down procedure. The dump temperature registered was 100 °C. In order to obtain good homogeneous mixes, the mixing process was further continued on the laboratory open mill Rubicon (roll distance: 150 mm, roll width: 320 mm) with a friction of 1:1.25 at 40 °C for 6 min. The polymer compositions were press-cured in slabs of 13.5 cm x 13.5 cm at 180 °C in a hydraulic press Agila, type PE 100, at 100 bar, and then post-cured at 175 °C for four hours at ambient pressure.

The Mooney viscosity of the compounds was determined at 100 °C while the Mooney scorch measurement was conducted at 120 °C. Both studies were performed in accordance with DIN 53523. The vulcanisation process was measured at 180 °C in accordance with DIN 53529. The processing and curing characteristics of the compounds A - C are reported in Table 2.

**Table 2.**

| | A | B | C | D |
|---|---|---|---|---|
| Mooney viscosity | | | | |
| ML(1+4)@100°C[MU] | 44 | 48 | 45 | 47 |
| Mooney scorch @ 120 °C | | | | |
| T5 [min] = Scorch time | 24.3 | 13.0 | 17.7 | 15.2 |
| MDR 180 °C, 30 min | | | | |
| ML, [dNm] | 1.7 | 1.8 | 1.7 | 1.8 |
| MH, [dNm] | 7.4 | 8.3 | 7.0 | 8.5 |
| T10, [min] | 0.7 | 0.6 | 0.7 | 0.6 |
| T50, [min] | 4.2 | 2.8 | 3.6 | 3.7 |
| T90, [min] | 18.3 | 15.5 | 17.2 | 17.3 |
| Peak rate [dNm/min] | 1.4 | 2.5 | 1.6 | 2.0 |

It can be clearly seen from the test results that blend C and D, which are according to the invention show results comparable to blend A. Blend A contains the hazardous di-o-tolyl-guandine.

The Mooney scorch of compound C is significantly improved compared to compound B (monomeric carbodiimides used), which is an important practical advantage in some conventional applications of the compounds. Compound D also shows some improvement, while is not as significant as with compound C.

It can also be seen quite clearly that the combination of accelerator Rhenogran® XLA-60 with the retarder Stabaxol® I or alternatively Benzopic acid leads to a fast but manageable curing time (t90-t10), which offers an opportunity for cost reductions in the production of rubber articles.

Direct comparison of compound B with C, or D, all containing Rhenogran^{®} XLA-60 as an accelerator, reveals the significant improvement regarding scorch safety at T5 [min] which was achieved in example C by adding Stabaxol® I, and in example D by adding benzoic acid as a retarder.

### Example 2:

Table 3 shows the ingredients for the compounds E, F and G in phr (Example 3).

**Table 3.**

| Ingredient | E (comparison) | F (according to the invention) | G (according to the invention) |
|---|---|---|---|
| HNBR1 | 100.0 | 100.0 | 100.0 |
| Corax® N-550 | 40.0 | 40.0 | 40.0 |
| DIPLAST® TM 8-10/ST | 5.0 | 5.0 | 5.0 |
| EDENOR® C 18 98-100 | 0.5 | 0.5 | 0.5 |
| LUVOMAXX® CDPA | 1.5 | 1.5 | 1.5 |
| DIAK® NO.1 | 2.5 | 2.5 | 2.5 |
| Rhenogran® XLA 60 | 4.0 | 4.0 | 4.0 |
| Stabaxol® I | | 1.0 | 1.5 |
| Total phr | 153.5 | 154.5 | 155.0 |

| | | | |
|---|---|---|---|
| **Diplast**® **TM 8-10/ST:** Trioctyl mellitate, available from Lonza SpA, Italy **EDENOR**® **C 18 98-100:** Stearic acid, available from oleo chemicals **LUVOMAXX**® **CDPA:** p-dicumyl diphenylamine, available from Lehmann & Voss **DIAK**® **NO.** 1: hexamethylenediamine carbamate **HNBR1:** A hydrogenated nitrile butadiene terpolymer prepared as hereinafter described with a residual double bound content of 0.4 % and a maleic monoethylester content of 4.5 % and a Mooney viscosity (ML 1+4 @100°C) of 101. | | | |

The nitrile rubber "NBR1" used as starting basis for the hydrogenation to obtain "HNBR1" contained repeating units of acrylonitrile, butadiene and a termonomer in the amounts given in the following Table A and had the Mooney Viscosity also mentioned in Table A, futher details are disclosed in EP 09164539.0.

**Table A:**

| **NBR** | **Butadiene Content [% by weight]** | **Termonomer (iii)** | **Termonomer (iii) Content [% by weight]** | **Acrylonitrile Content [% by weight]** | **Mooney Viscosity (ML 1+4** @**100°C)** |
|---|---|---|---|---|---|
| NBR 1 | 60,4 | maleic acid monoethyl ester | 4,5 | 35,1 | 35 |

A 12% total solids solution of NBR 1 in monochlorobenzene ("MCB") as solvent was charged into a high pressure reactor and heated to 138 °C while being agitated at 600 rpm. Once the temperature was stabilized a solution of Wilkinson's catalyst and triphenylphosphine ("TPP") as co-catalyst were introduced and hydrogen was introduced into the vessel to reach a pressure of 85 bar. The reaction was agitated for 4 hrs at which time the hydrogen pressure was released and the reactor cooled to room temperature (∼22 °C). The polymer solution was then removed from the reactor and coagulated using either steam or alcohol methods known in the art. The isolated polymer was then dried.

**Table 4.**

| MDR = Moving Die Rheometer Test (at 180°C for 30') | | | | | |
|---|---|---|---|---|---|
| | | | E | F | G |
| | S' min | dNm | 1.99 | 1.83 | 2.05 |
| | S'max | dNm | 29.74 | 28.56 | 27.17 |
| | Delta S' | dNm | 27.75 | 26.73 | 25.12 |
| | TS 2 | S | 38 | 40 | 40 |
| | t 50 | S | 125 | 133 | 136 |
| | t 90 | S | 382 | 434 | 453 |
| | t 95 | S | 489 | 590 | 634 |

As can be deduced from the Moving-Die-Rheometer - results given in Table 4, vulcanisation kinetics are slowed down by the application of Stabaxol®. As this measurement is performed at 180 °C, the differences are not as pronounced as in the former test, where the measurement was carried out at 120 °C. Nevertheless, the results again clearly indicate the retarder function of Stabaxol I. TS 2 and T50 are shifted to longer vulcanisation times.

## Claims

1. Guanidine-free vulcanisable mixtures containing ethylene acrylate (AEM), polyacrylate (ACM) and/or hydrogenated acrylnitrile (HNBR)-based rubbers and at least one vulcanisation accelerator selected from
a non aromatic amine selected from the group of diethylamine, dicyclohexylamine, butylamine and/or cyclohexylamine, or an amidine, as well as salts and any mixtures thereof
and at least one retarder system comprising
(a) a benzoic acid, salicylic acid, phthalic acid, phthalic acid anhydride and/or C₆-C₂₄-dicarboxylic acid, and/or
(b) a carbodiimide and/or
(c) a polycarbodiimide
and / or any mixtures of compounds (a), (b) and (c).

2. Guanidine-free vulcanisable mixtures according to claim 1, **characterized in that**, the amidine is
1,8-diazabicyclo[5.4.0]undecene-7 (DBU) or 1,5-diazabicyclo[4.3.0]nonene-5 (DBN),
1,5,7-triazabicyclo[4.4.0]dec-5-ene (TBD),
7-methyl-1,5,7-triazabicyclo[4.4.0]dec-5-ene (MTBD) and its derivatives.

3. Guanidine-free vulcanisable mixture according to any one of claims 1 to 2, **characterized in that**, the retarder is benzoic acid.

4. Guanidine-free vulcanisable mixture according to any one of claims 1 to 3, **characterized in that**, the retarder is at least one sterically hindered carbodiimide.

5. Guanidine-free vulcanisable mixtures according to any one of claims 1 to 4, **characterized in that**, the retarder is at least one monomeric or dimeric carbodiimide.

6. Guanidine-free vulcanisable mixtures according to any one of claims 1 to 5, **characterized in that**, the retarder is at least one dimeric carbodiimid or a polycarbodiimide of the formula (II)
- R'-(N=C=N-R)ₙ-R" (I)
in which
- R represents an aromatic, aliphatic, cycloaliphatic or aralkylene radical which, in the case of an aromatic or an aralkylene residue, in at least one ortho-position, preferably in both ortho-positions to the aromatic carbon atom which carries the carbodimide group, may carry aliphatic and/or cycloaliphatic substituents with at least 2 C-atoms, preferably branched or cyclic aliphatic radicals with at least 3 C-atoms,
- R' represents aryl, aralkyl or R-NCO, R-NHCONHR', R-NHCONR¹R² and R-NHCOOR³,
- R" represents -N=C=N-aryl, -N=C=N-alkyl, -N=C=N-cycloalkyl, -N=C=N-aralkyl, -NCO, -NHCONHR¹, -NHCONR¹R² or -NHCOOR³, wherein, in R' and in R", independently of one another, R' and R² are the same or different and represent an alkyl, cycloalkyl or aralkyl radical, and R³ has one of the meanings of R¹ or represents a polyester or a polyamide radical, and
- n represents an integer from 2 to 5,000.

7. Guanidine-free vulcanisable mixtures according to any one of claims 1 to 6, **characterized in that** the retarder is at least one monomeric carbodiimide according to formula (III)

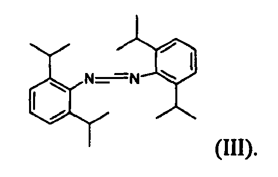

8. Guanidine-free vulcanisable mixtures according to any one of claims 1 to 7, **characterized in that**, carbodiimides are used as a mixture of at least two different carbodiimides as retarder.

9. Guanidine-free vulcanisable mixtures according to any one of claims 1 to 8, **characterized in that**, it further comprises a filler selected from the group consisting of silica, carbon black, clay, talc, aluminum hydroxide, calcium carbonate, and magnesium carbonate.

10. Guanidine-free vulcanisable mixtures according to any one of claims 1 to 9 **characterized in that** the accelerator further comprises at least one additional polymer as a binder material, selected from the group consisting of acrylate rubber (ACM), ethylene acrylate rubber (AEM), ethylene propylene diene terpolymer (EPDM), ethylene propylene copolymer (EPM), ethylene vinyl acetate (EVM), ethylene methyl acrylate (EMA), acrylnitrile-diene copolymer (NBR), hydrogenated acrylnitril-diene (HNBR) copolymer and any mixture thereof.

11. Guanidine-free vulcanisable mixtures according to any one of claims 1 to 10, **characterized in that** it further comprise additives selected from the group consisting of dispersants and plasticizers.

12. Vulcanisate, prepared by cross-linking the vulcanisable mixtures according claims 1 to 11 by using a curative system based on a diamine or a diamine carbamate.

13. Process for preparing vulcanisates according to claim 12, **characterized in that**, ethylene acrylate (AEM), polyacrylate (ACM) and/or hydrogenated acrylonitrile (HNBR)-based rubbers and at least one vulcanisation accelerator selected from an amine selected from the group of diethylamine, dicyclohexylamine, butylamine and/or cyclohexylamine, an amidine as well as salts and any mixtures of the above-mentioned accelerators and at least one retarder system comprising (a) an acid, (b) a carbodiimide, (c) a polycarbodiimide and any mixtures of the above-mentioned retarders are cross-linked using a curative system based on a polyamine or a diamine carbamate.

14. Use of the vulcanisate according to claim 12 for automotive, oil-field and/or off shore applications.

## Patentansprüche

1. Guanidinfreie vulkanisierbare Mischungen, enthaltend Kautschuke auf Basis von Ethylen-Acrylat (AEM), Polyacrylat (ACM) und/oder hydriertem Acrylnitril (HBNR) und mindestens einen Vulkanisationsbeschleuniger, ausgewählt unter einem nichtaromatischen Amin aus der Gruppe bestehend aus Diethylamin, Dicyclohexylamin, Butylamin und/oder Cyclohexylamin oder einem Amidin sowie Salzen und beliebigen Mischungen davon,
und mindestens ein Retardersystem, umfassend
(a) Benzoesäure, Salicylsäure, Phthalsäure, Phthalsäureanhydrid und/oder eine C₆-C₂₄-Dicarbonsäure und/oder
(b) ein Carbodiimid und/oder
(c) ein Polycarbodiimid
und/oder beliebige Mischungen von Verbindungen (a), (b) und (c).

2. Guanidinfreie vulkanisierbare Mischungen nach Anspruch 1, **dadurch gekennzeichnet, dass** es sich bei dem Amidin um
1,8-Diazabicyclo[5.4.0]undecen-7 (DBU) oder 1,5-Diazabicyclo[4.3.0]nonen-5 (DBN),
1,5,7-Triazabicyclo[4.4.0]dec-5-en (TBD),
7-Methyl-1,5,7-triazabicyclo[4.4.0]dec-5-en (MTBD) und Derivate davon
handelt.

3. Guanidinfreie vulkanisierbare Mischungen nach Anspruch 1 oder 2, **dadurch gekennzeichnet, dass** es sich bei dem Retarder um Benzoesäure handelt.

4. Guanidinfreie vulkanisierbare Mischungen nach einem der Ansprüche 1 bis 3, **dadurch gekennzeichnet, dass** es sich bei dem Retarder um mindestens ein sterisch gehindertes Carbodiimid handelt.

5. Guanidinfreie vulkanisierbare Mischungen nach einem der Ansprüche 1 bis 4, **dadurch gekennzeichnet, dass** es sich bei dem Retarder um mindestens ein monomeres oder dimeres Carbodiimid handelt.

6. Guanidinfreie vulkanisierbare Mischungen nach einem der Ansprüche 1 bis 5, **dadurch gekennzeichnet, dass** es sich bei dem Retarder um mindestens ein dimeres Carbodiimid oder ein Polycarbodiimid der Formel (I)
- R'-(N=C=N-R)ₙ-R" (I)
worin
- R für einen aromatischen Rest, aliphatischen Rest, cycloaliphatischen Rest oder Aralkylenrest steht, der im Fall eines aromatischen Rests oder Aralkylenrests in mindestens einer ortho-Position und vorzugsweise in beiden ortho-Positionen zu dem aromatischen Kohlenstoffatom, das die Carbodiimidgruppe trägt, aliphatische und/oder cycloaliphatische Substituenten mit mindestens 2 C-Atomen und vorzugsweise verzweigte oder cyclische aliphatische Reste mit mindestens 3 C-Atomen tragen kann,
- R' für Aryl, Aralkyl oder R-NCO, R-NHCONHR¹, R-NHCONR¹R² und R-NHCOOR³ steht,
- R'' für -N=C=N-Aryl, -N=C=N-Alkyl, -N=C=N-Cycloalkyl, -N=C=N-Aralkyl, -NCO, -NHCONHR¹, -NHCONR¹R² oder -NHCOOR³ steht, worin in R' und R'' unabhängig voneinander R¹ und R² gleich oder verschieden sind und für einen Alkyl-, Cycloalkyl- oder Aralkylrest stehen und R³ eine der Bedeutungen von R¹ besitzt oder für einen Polyester- oder Polyamidrest steht, und
- n für eine ganze Zahl von 2 bis 5000 steht, handelt.

7. Guanidinfreie vulkanisierbare Mischungen nach einem der Ansprüche 1 bis 6, **dadurch gekennzeichnet, dass** es sich bei dem Retarder um mindestens ein monomeres Carbodiimid der Formel (III) 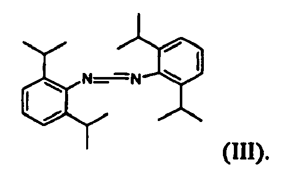 handelt.

8. Guanidinfreie vulkanisierbare Mischungen nach einem der Ansprüche 1 bis 7, **dadurch gekennzeichnet, dass** als Retarder Carbodiimide in Form einer Mischung von mindestens zwei verschiedenen Carbodiimiden verwendet werden.

9. Guanidinfreie vulkanisierbare Mischungen nach einem der Ansprüche 1 bis 8, **dadurch gekennzeichnet, dass** sie ferner einen Füllstoff aus der Gruppe bestehend aus Kieselsäure, Ruß, Ton, Talk, Aluminiumhydroxid, Calciumcarbonat und Magnesiumcarbonat umfassen.

10. Guanidinfreie vulkanisierbare Mischungen nach einem der Ansprüche 1 bis 9, **dadurch gekennzeichnet, dass** der Beschleuniger ferner als Bindemittel mindestens ein zusätzliches Polymer aus der Gruppe bestehend aus Acrylat-Kautschuk (ACM), Ethylen-Acrylat-Kautschuk (AEM), Ethylen-Propylen-Dien-Terpolymer (EPDM), Ethylen-Propylen-Copolymer (EPM), Ethylen-Vinylacetat (EVM), Ethylen-Methylacrylat (EMA), Acrylnitril-Dien-Copolymer (NBR), hydriertem Acrylnitril-Dien-Copolymer (HNBR) und einer beliebigen Mischung davon umfasst.

11. Guanidinfreie vulkanisierbare Mischungen nach einem der Ansprüche 1 bis 10, **dadurch gekennzeichnet, dass** sie ferner Additive aus der Gruppe bestehend aus Dispergiermitteln und Weichmachern umfassen.

12. Vulkanisat, hergestellt durch Vernetzen der vulkanisierbaren Mischungen nach einem der Ansprüche 1 bis 11 durch Verwendung eines Härtersystems auf Basis eines Diamins oder eines Diamincarbamats.

13. Verfahren zur Herstellung von Vulkanisaten nach Anspruch 12, **dadurch gekennzeichnet, dass** man Kautschuke auf Basis von Ethylen-Acrylat (AEM), Polyacrylat (ACM) und/oder hydriertem Acrylnitril (HBNR) und mindestens einen Vulkanisationsbeschleuniger, ausgewählt unter einem Amin aus der Gruppe bestehend aus Diethylamin, Dicyclohexylamin, Butylamin und/oder Cyclohexylamin oder einem Amidin sowie Salzen und beliebigen Mischungen der oben aufgeführten Beschleuniger, und mindestens ein Retardersystem, umfassend (a) eine Säure, (b) ein Carbodiimid, (c) ein Polycarbodiimid und beliebige Mischungen der oben aufgeführten Retarder unter Verwendung eines Härtersystems auf Basis eines Polyamins oder eines Diamincarbamats vernetzt.

14. Verwendung des Vulkanisats nach Anspruch 12 für Automobil-, Ölfeld- und/oder Offshore-Anwendungen.

## Revendications

1. Mélanges vulcanisables sans guanidine contenant de l'acrylate d'éthylène (AEM), des caoutchoucs à base de polyacrylate (ACM) et/ou d'acrylonitrile hydrogéné (HNBR) et au moins un accélérateur de vulcanisation choisi parmi
une amine non aromatique choisie dans le groupe de la diéthylamine, la dicyclohexylamine, la butylamine et/ou la cyclohexylamine, ou une amidine, ainsi que leurs sels et mélanges quelconques
et au moins un système retardateur comprenant
(a) un acide benzoïque, un acide salicylique, un acide phtalique, un anhydride d'acide phtalique et/ou un acide dicarboxylique en C₆-C₂₄, et/ou
(b) un carbodiimide et/ou
(c) un polycarbodiimide
et/ou des mélanges quelconques des composés (a), (b) et (c).

2. Mélanges vulcanisables sans guanidine selon la revendication 1, **caractérisés en ce que** l'amidine est
le 1,8-diazabicyclo[5.4.0]undécène-7 (DBU) ou le 1,5-diazabicyclo[4.3.0]nonène-5 (DBN),
le 1,5,7-triazabicyclo[4.4.0]déc-5-ène (TBD),
le 7-méthyl-1,5,7-triazabicyclo[4.4.0]déc-5-ène (MTBD) et ses dérivés.

3. Mélanges vulcanisables sans guanidine selon l'une quelconque des revendications 1 à 2, **caractérisés en ce que** le retardateur est l'acide benzoïque.

4. Mélanges vulcanisables sans guanidine selon l'une quelconque des revendications 1 à 3, **caractérisés en ce que** le retardateur est au moins un carbodiimide à empêchement stérique.

5. Mélanges vulcanisables sans guanidine selon l'une quelconque des revendications 1 à 4, **caractérisés en ce que** le retardateur est au moins un carbodiimide monomère ou dimère.

6. Mélanges vulcanisables sans guanidine selon l'une quelconque des revendications 1 à 5, **caractérisés en ce que** le retardateur est au moins un carbodiimide dimère ou un polycarbodiimide de formule (I)
R'-(N=C=N-R)ₙ-R" (I)
dans laquelle
- R représente un radical aromatique, aliphatique, cycloaliphatique ou aralkylène qui, dans le cas d'un résidu aromatique ou aralkylène, peut porter sur au moins une position ortho, de préférence sur les deux positions ortho, de l'atome de carbone aromatique qui porte le groupe carbodimide, des substituants aliphatiques et/ou cycloaliphatiques comportant au moins 2 atomes de C, de préférence des radicaux aliphatiques ramifiés ou cycliques comportant au moins 3 atomes de C,
- R' représente un groupe aryle, aralkyle ou R-NCO, R-NHCONHR¹, R-NHCONR¹R² et RNHCOOR³,
- R" représente un groupe -N=C=N-aryle, -N=C=N-alkyle, -N=C=N-cycloalkyle, -N=C=N-aralkyle, -NCO, -NHCONHR¹, -NHCONR¹R² ou -NHCOOR³, dans lequel, dans R' et dans R", indépendamment l'un de l'autre, R¹ et R² sont identiques ou différents et représentent un radical alkyle, cycloalkyle ou aralkyle, et R³ a l'une des significations données pour R¹ ou représente un radical polyester ou un radical polyamide, et
- n représente un nombre entier de 2 à 5 000.

7. Mélanges vulcanisables sans guanidine selon l'une quelconque des revendications 1 à 6, **caractérisés en ce que** le retardateur est au moins un monomère carbodiimide répondant à la formule (III)

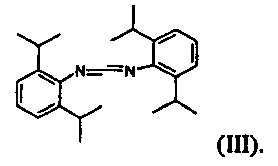

8. Mélanges vulcanisables sans guanidine selon l'une quelconque des revendications 1 à 7, **caractérisés en ce que** les carbodiimides sont utilisés en mélange d'au moins deux carbodiimides différents en tant que retardateur.

9. Mélanges vulcanisables sans guanidine selon l'une quelconque des revendications 1 à 8, **caractérisés en ce qu'**ils comprennent en outre une charge choisie dans le groupe constitué par la silice, le noir de carbone, l'argile, le talc, l'hydroxyde d'aluminium, le carbonate de calcium et le carbonate de magnésium.

10. Mélanges vulcanisables sans guanidine selon l'une quelconque des revendications 1 à 9 **caractérisés en ce que** l'accélérateur comprend en outre au moins un polymère supplémentaire en tant que matériau liant, choisi dans le groupe constitué par un caoutchouc acrylate (ACM), un caoutchouc acrylate d'éthylène (AEM), un ter-polymère éthylène/propylène/diène (EPDM), un copolymère éthylène/propylène (EPM), éthylène/acétate de vinyle (EVM), éthylène/acrylate de méthyle (EMA), un copolymère acrylonitrile-diène (NBR), un copolymère acrylonitrile hydrogéné-diène (HNBR) et un mélange quelconque d'entre eux.

11. Mélanges vulcanisables sans guanidine selon l'une quelconque des revendications 1 à 10, **caractérisés en ce qu'**ils comprennent en outre des additifs choisis dans le groupe constitué par les dispersants et les plastifiants.

12. Vulcanisat, préparé par réticulation des mélanges vulcanisables selon les revendications 1 à 11 au moyen d'un système durcisseur à base de diamine ou de carbamate de diamine.

13. Procédé de préparation de vulcanisats selon la revendication 12, **caractérisés en ce que** des caoutchoucs à base d'acrylate d'éthylène (AEM), de polyacrylate (ACM) et/ou d'acrylonitrile hydrogéné (HNBR) et au moins un accélérateur de vulcanisation choisi parmi une amine choisie dans le groupe de la diéthylamine, la dicyclohexylamine, la butylamine et/ou la cyclohexylamine, une amidine ainsi que des sels et des mélanges quelconques des accélérateurs susmentionnés et au moins un système retardateur comprenant (a) un acide, (b) un carbodiimide, (c) un polycarbodiimide et des mélanges quelconques des retardateurs susmentionnés sont réticulés au moyen d'un système durcisseur à base d'une polyamine ou d'un carbamate de diamine.

14. Utilisation du vulcanisat selon la revendication 12 pour des applications dans l'automobile, les gisements de pétrole et/ou les activités off-shore.
